# EUROPÄISCHE PATENTANMELDUNG

(11) **EP 3 130 430 A1**
(43) Veröffentlichungstag der Anmeldung: **15.02.2017**
(21) Anmeldenummer: 16183737.2
(22) Anmeldetag: 11.08.2016
(51) Int. Cl.: B25J 15/02, B25J 19/00, H02K 49/10, H02K 7/106

(54) **AUTOMATIONSKOMPONENTE MIT STROMLOSER BREMSE**

(30) Priorität: 12.08.2015 DE 102015215385
(71) Anmelder: Schunk GmbH & Co. KG Spann- und Greiftechnik, 74348 Lauffen am Neckar (DE)
(72) Erfinder: Barta, Daniel, 74629 Pfedelbach (DE); Quaas, Matthais, 74232 Abstatt / Happenbach (DE); Schleusener, Tobias, 75031 Eppingen (DE)
(74) Vertreter: DREISS Patentanwälte PartG mbB

(57) **Zusammenfassung**

Automationskomponente (10) mit einem Antrieb (12), mit einem von dem Antrieb zwischen Stellpositionen bewegbaren Stellglied und mit einer Bremseinheit (42), wobei die Bremseinheit beim Bewegen des Stellgliedes und beim Einnehmen der Stellposition des Stellgliedes stromlos betrieben wird und eine Bremskraft auf das Stellglied und/oder den Antrieb und/oder ein mit dem Stellglied bewegungsgekoppeltes Bauteil (20) ausübt, wobei das Stellglied bei Stromlosschaltung des Antriebs auf Grund der Bremskraft festgesetzt ist.

## Beschreibung

Die Erfindung betrifft eine Automationskomponente mit einem Antrieb, mit einem von dem Antrieb zwischen Stellpositionen bewegbaren Stellglied und mit einer Bremseinheit. Die Erfindung betrifft auch eine Spann- oder Greifvorrichtung als Automationskomponente.

Bei dem Antrieb kann es sich insbesondere um einen elektrischen, pneumatischen oder hydraulischen Antrieb handeln.

Bei der Automationskomponente kann es sich beispielsweise um eine Lineareinheit, eine Schwenkeinheit, eine Dreheinheit oder insbesondere auch um eine Greif- oder Spannvorrichtung handeln. Derartige Automationskomponenten sind aus dem Stand der Technik in vielfältiger Weise vorbekannt.

Beispielsweise ist aus der DE 10 2013 211 528 A1 eine Greif- oder Spannvorrichtung vorbekannt, bei der mittels einer Bremseinheit ein Stellglied dann festsetzbar ist, wenn ein Gegenstand gegriffen ist. Derartige Bremseinheiten sind regelmäßig als Magnetbremsen ausgebildet, welche durch Strombeaufschlagung gelüftet werden. Folglich ist eine Dauerbestromung notwendig, um die Bremse geöffnet zu halten. Wird eine solche Bremse stromlos geschaltet, so fällt diese ein und es wird eine Bremskraft auf das Stellglied ausgeübt. Die Dauerbestromung bewirkt dabei nicht nur einen sehr hohen Energieverbrauch, sondern auch eine Erwärmung der Spann- oder Greifvorrichtung, was zu einer unerwünschten Beeinträchtigung der Funktion derartiger Vorrichtungen führen kann.

Es ist folglich Aufgabe der Erfindung, eine Automationskomponente bereitzustellen, welche vergleichsweise ressourcensparend betreibbar ist und möglichst einfach aufgebaut ist.

Diese Aufgabe wird mit einer Automationskomponente mit den Merkmalen des Anspruchs 1 gelöst. Es ist folglich vorgesehen, dass die Bremseinheit beim Bewegen des Stellgliedes und beim Einnehmen der Stellposition des Stellgliedes stromlos betrieben wird. Ferner übt die Bremseinheit eine Bremskraft auf das Stellglied und/oder den Antrieb und/oder ein mit dem Stellglied bewegungsgekoppeltes aus. Das Bauteil kann dabei insbesondere zwischen dem Stellglied und dem Antrieb vorgesehen sein und insbesondere Teil eines Getriebes sein.

Dabei ist die Bremskraft derart hoch, dass bei Stromlosschaltung des Antriebs das Stellglied auf Grund der Bremskraft festgesetzt ist. Wirkt die Bremskraft auf das Stellglied, so wird das Stellglied unmittelbar festgesetzt. Wirkt die Bremskraft auf den Antrieb und/oder das Bauteil, so wird das Stellglied mittelbar festgesetzt.

Im Gegensatz zum Stand der Technik wird folglich eine Bremskraft sowohl beim Bewegen des Stellgliedes ausgeübt, als auch dann, wenn das Stellglied seine Stellposition eingenommen hat. Die Bremskraft wird dabei stromlos mittels der Bremseinheit bereitgestellt.

Ist die Automationskomponente beispielsweise als Greifvorrichtung ausgebildet, so wird eine Bremskraft sowohl dann bereitgestellt, wenn mit dem Stellglied bewegungsgekoppelte Backen verfahren werden, als auch dann, wenn ein Gegenstand mittels der Backen gegriffen ist und keine Bewegung des Stellgliedes und damit der Backen mehr durchgeführt wird.

Die erfindungsgemäße Automationskomponente zeichnet sich damit insbesondere dadurch aus, dass die Bremseinheit nicht bestromt werden muss, wodurch eine Energieeinsparung erzielt wird. Zwar wird stattdessen eine kontinuierliche Bremskraft ausgeübt, welche von der Antriebskraft überwunden werden muss, um das Stellglied anzutreiben. Allerdings wird im Gesamtprozess der Verwendung der Automationskomponente eine Energiereduktion erzielt, wobei auch die Wärmeentwicklung durch Wegfall der Bestromung der Bremseinheit deutlich geringer ist als im Stand der Technik. Ferner wird keine Steuereinheit zur Ansteuerung der Bremseinheit benötigt und auch eine vergleichsweise aufwändige Verkabelung der Bremseinheit entfällt vollständig.

Wird der Antrieb ausgeschaltet oder fällt der Antrieb aus, so wird durch die Bremseinheit eine Krafterhaltung bereitgestellt, sodass das Stellglied festgesetzt ist. Bei Spann- oder Greifvorrichtungen ist dabei ausreichend, wenn die Bremseinheit eine Greifkrafterhaltung von ungefähr 30 % erreicht. Diese lediglich teilweise Erhaltung der Greifkraft ist daher zulässig, da im stromlosen Zustand nur die Erdanziehungskraft wirkt und Beschleunigungskräfte auf Grund des Stillstands des Stellgliedes entfallen. Ein Gegenstand kann folglich auch bei Stromausfall oder anderweitig bedingtem Not-Aus der Spann- oder Greifeinheit zuverlässig gegriffen beziehungsweise gespannt bleiben. Handelt es sich bei der Automationskomponente beispielsweise um eine Schwenkeinheit oder eine Lineareinheit, so genügt auch in diesem Fall eine Bremskraft von ungefähr 30 % der Antriebskraft, um eine Positionserhaltung einer derartigen Automationskomponente zu erzielen.

Dabei ist einerseits denkbar, dass der Antrieb eine Antriebswelle aufweist, und dass die Bremskraft auf die Antriebswelle wirkt. Andererseits ist auch denkbar, dass zwischen dem Antrieb und dem Stellglied ein Antriebsgetriebe mit einer Getriebewelle vorgesehen ist und dass die Bremskraft auf die Getriebewelle wirkt. Bei der Getriebewelle kann es sich insbesondere um eine Abtriebswelle handeln. Ein Festsetzen der Antriebswelle und/oder Getriebewelle ist auf besonders einfache und platzsparende Art und Weise möglich.

Vorteilhafterweise umfasst die Bremseinheit eine an der Antriebswelle oder Getriebewelle angeordnete erste Magneteinheit und eine zweite damit zusammenwirkende, stationäre Magneteinheit, wobei die Magneteinheiten derart zusammenwirken, dass die Bremskraft auf die Antriebswelle oder Getriebewelle ausgeübt wird.

Gemäß einer besonders vorteilhaften Ausgestaltung der Erfindung ist die erste Magneteinheit als erster mehrpoliger Ringmagnet ausgebildet. Dieser Ringmagnet kann einerseits an der Antriebswelle angeordnet sein. Andererseits ist auch denkbar, dass dieser Ringmagnet an der Getriebewelle angeordnet ist. Weiterhin ist die zweite Magneteinheit als zweiter stationärer mehrpoliger Ringmagnet ausgebildet, welcher mit dem ersten mehrpoligen Ringmagnet zusammenwirkt und vorzugsweise komplementär zu diesem ausgebildet ist. Dabei wirken die Ringmagnete derart zusammen, dass eine Bremskraft auf die Antriebswelle oder Getriebewelle ausgeübt wird.

Eine Bremskraft wird dabei dadurch ausgeübt, dass die Segmente unterschiedlicher Polung des ersten und des zweiten Ringmagnetes miteinander zusammenwirken und damit ein Rastmoment beziehungsweise eine Rastkraft erzeugen. Es werden folglich diskrete Raststellungen bereitgestellt, jeweils dann, wenn die Ringmagnete derart zueinander ausgerichtet sind, dass Segmente unterschiedlicher Polung einander gegenüber liegen. Bei einer Stromlosschaltung des Antriebes wird die Automationskomponente folglich dadurch gebremst, dass sich die Ringmagnete zueinander ausrichten und sich einander gegenüberliegende Segmente magnetisch anziehen. Dabei kann insbesondere bei Spann- oder Greifvorrichtungen eine Getriebeübersetzung derart gewählt werden, dass die durch das Einnehmen der diskreten Raststellung ausgeübte Stellgliedbewegung derart gering ist, dass ein Gegenstand gegriffen beziehungsweise gespannt bleibt.

Dadurch, dass die Ringmagnete beabstandet zueinander angeordnet sind, kann weiterhin eine verschleißfreie Bremseinheit unabhängig von dem Vorhandensein von Schmierstoffen bereitgestellt werden.

Die Ringmagnete umfassen vorzugsweise 8 bis 64, weiter vorzugsweise 16 bis 32 Segmente. Benachbarte Segmente der Ringmagnete weisen insbesondere eine unterschiedliche Polung auf. Die Grenzflächen der einzelnen Segmente verlaufen vorzugsweise in radialer Richtung. Die einzelnen Segmente sind entlang der Drehachse der Antriebswelle oder Getriebewelle vorzugsweise zylinderförmig ausgebildet.

Vorteilhafterweise verläuft der erste Ringmagnet auf einer Kreisbahn quer zur Drehachse der Antriebswelle oder Getriebewelle. Weiter vorzugsweise ist der zweite Ringmagnet entlang der Drehachse der Antriebswelle oder Getriebewelle gegenüberliegend und beabstandet zum ersten Ringmagnet angeordnet. Die einander gegenüberliegenden Oberflächen der beiden Ringmagnete liegen folglich jeweils in einer Querebene zur Drehachse der Antriebswelle oder Getriebewelle, wobei die Querebenen beabstandet zueinander verlaufen.

Eine besonders vorteilhaft ausgebildete Automationskomponente ergibt sich dann, wenn der erste Ringmagnet an einem freien Ende der Antriebswelle oder Getriebewelle angeordnet ist. Die Antriebswelle weist dabei insbesondere zwei freie Enden auf, wobei das eine freie Ende mit dem Stellglied mittelbar oder unmittelbar zusammenwirkt und das andere Ende mit der Bremseinheit zusammenwirkt. Als besonders vorteilhaft hat sich dabei herausgestellt, wenn der erste Ringmagnet an einer am freien Ende der Antriebswelle oder Getriebewelle angeformten ankerartig ausgebildeten ersten Aufnahmeeinrichtung angeordnet ist. Demgegenüber ist der zweite Ringmagnet an einer stationären zweiten Aufnahmeeinrichtung angeordnet. Dabei durchgreift die Antriebswelle oder Getriebewelle den zweiten Ringmagnet.

Die stationäre zweite Aufnahmeeinrichtung kann insbesondere am Antriebsgehäuse angeordnet sein, so dass die Antriebswelle das Gehäuse, die zweite Aufnahmeeinrichtung sowie den zweiten Ringmagnet durchgreift und die erste Aufnahmeeinrichtung damit außerhalb des Antriebsgehäuses angeordnet ist. Damit kann eine besonders funktionssichere Automationskomponente bereitgestellt werden.

Gemäß einer weiteren Ausgestaltung der Erfindung weist die Bremseinheit eine am Stellglied oder Antrieb oder am Bauteil vorgesehene erste Reibfläche auf. Weiterhin umfasst die Bremseinheit eine mit der ersten Reibfläche zusammenwirkende zweite Reibfläche. Eine kontinuierliche Bremskraft wird folglich dadurch bereitgestellt, dass die Reibflächen aneinander reiben.

Dabei ist insbesondere denkbar, dass die zweite Reibfläche verschieblich gelagert ist. Die Reibfläche kann insbesondere von einem an einem gehäuseseitigen Stützabschnitt angeordneten Reibelement gebildet werden.

Vorteilhafterweise umfasst die Bremseinheit ferner ein Druckmittel, sodass die zweite Reibfläche mittels des Druckmittels gegenüber der ersten Reibfläche druckbeaufschlagbar ist. Das Druckmittel kann dabei insbesondere als Druckfeder ausgebildet sein. Dabei kann es sich insbesondere um eine um den Stützabschnitt der Reibfläche umlaufende Schraubenfeder handeln, welche sich einerends am Gehäuse und andererends an der zweiten Reibfläche abstützt. Damit wird eine kontinuierliche Bremskraft bereitgestellt, auch dann, wenn durch die kontinuierliche Reibung ein Verschleiß der Reibflächen erfolgt.

Gemäß einer besonders vorteilhaften Ausgestaltung der Erfindung weist die Antriebswelle oder Getriebewelle ein Ritzel mit einer kegelstumpfförmigen Ausnehmung auf. Die Ausnehmung wird dabei von der ersten Reibfläche begrenzt. Ferner kann die Ausnehmung von der Antriebswelle oder Getriebewelle durchgriffen werden, wobei das freie Ende der Antriebswelle oder Getriebewelle in einem gehäuseseitigen Stützabschnitt gelagert sein kann. Folglich kann die Ausnehmung um die Antriebswelle oder Getriebewelle verlaufend ausgebildet sein. Am Stützabschnitt kann ein Reibelement parallel zur Drehachse der Antriebswelle oder Getriebewelle verschieblich angeordnet sein. Das Reibelement weist dabei insbesondere eine zur ersten Reibfläche komplementäre zweite Reibfläche auf. Am Reibelement kann eine Schraubenfeder um den Stützabschnitt umlaufend angeordnet, wobei sich die Schraubenfeder einerends am Reibelement und andererends am Gehäuse abstützt. Eine derartige Schraubenfeder kann eine Druckkraft auf das Reibelement parallel zur Drehachse ausüben, so dass die Reibflächen gegeneinander gedrückt werden. Damit übt die Bremseinheit eine Reibkraft und damit eine Bremskraft auf die Getriebewelle aus.

Gemäß einer weiteren Ausgestaltung der Erfindung weist die erste Reibfläche beziehungsweise die zweite Reibfläche mehrere Rastvorsprünge auf. Weiterhin weist die zweite Reibfläche beziehungsweise die erste Reibfläche dazu komplementäre Rastvertiefungen auf. Die Anzahl der Rastvertiefungen kann die Anzahl der Rastvorsprünge übersteigen. Bei Stromlosschaltung des Antriebs können die Rastvorsprünge in die Rastvertiefungen einrasten und damit eine diskrete Raststellung einnehmen, sodass die Automationskomponente festgesetzt wird. Dabei ragen die Rastvorsprünge vorzugsweise parallel zur Drehachse des Stellglieds, des Antriebs oder des Bauteils über die erste bzw. zweite Reibfläche axial hinaus. Die Rastvorsprünge können insbesondere lösbar anordenbar und pilzförmig mit einem Kopf und einem Steg ausgebildet sein, wobei der Steg in eine entsprechende Ausnehmung in der entsprechenden Reibfläche einführbar ist. Damit kann eine erhöhte Krafterhaltung bei Stromlosschaltung des Antriebes bereitgestellt werden. Bei einer Bewegung des Stellgliedes werden die Rastvorsprünge über die Rastvertiefungen "geschoben", so dass die Rastvorsprünge vorzugsweise elastisch nachgiebig ausgebildet sind.

Gemäß einer anderen Ausgestaltung der Erfindung umfasst die Bremseinheit eine Antriebswelle oder Getriebewelle mit einem gewindespindelartig ausgebildeten Abschnitt und eine an dem Abschnitt angeordnete Spindelmutter. Die Spindelmutter ist drehfest angeordnet und übt dabei eine Reibungskraft und dadurch eine Bremskraft auf die Antriebswelle oder Getriebewelle aus. Vorzugsweise ist die Spindelmutter mit einem Spannmittel verbunden. Das Spannmittel kann insbesondere als Feder ausgebildet sein, wobei die Feder insbesondere als Schraubenfeder ausgebildet sein kann und zumindest abschnittsweise um den gewindespindelartig ausgebildeten Abschnitt der Antriebswelle oder Getriebewelle verlaufen kann. Die Feder übt folglich eine Spannkraft auf die Spindelmutter längs der Bewegungsrichtung der Spindelmutter aus. Die Feder kann einerends an der Spindelmutter befestigt sein, während sie andererends an einer Einstellschraube befestigt sein kann, so dass mittels der Einstellschraube die Federhärte und damit die von der Spindelmutter ausgeübte Bremskraft einstellbar ist. Dabei nimmt die Bremskraft zu, je weiter die Spindelmutter von der Einstellschraube in axialer Richtung entfernt ist. Bei Spann- oder Greifvorrichtungen ist damit insbesondere eine Anordnung derart denkbar, dass die Bremskraft bei geschlossenen Spann- oder Greifbacken höher ist als bei geöffneten. Ebenso ist der umgekehrte Fall denkbar, sodass die Bremskraft bei geöffneten Spann-oder Greifbacken höher ist als bei geschlossenen.

Die Erfindung wird auch gelöst durch eine Spann- oder Greifvorrichtung als erfindungsgemäße Automationskomponente. Dabei ist wenigstens eine Backe mit dem Stellglied bewegungsgekoppelt, wobei das Stellglied bei Stromlosschaltung des Antriebs derart festgesetzt ist, dass ein mittels der Backe gegriffener oder gespannter Gegenstand gegriffen oder gespannt bleibt. Weiterhin kann zwischen dem Stellglied und der Backe ein elastisch verformbares Federelement vorgesehen sein, wobei die elastische Verformung des Federelements bei gegriffenem oder gespanntem Gegenstand größer ist als das Spiel des festgesetzten Stellglieds. Damit kann eine besonders günstige Greifkrafterhaltung bereitgestellt werden. Ein derartiges Federelement und dessen Anordnung innerhalb einer Spann- oder Greifvorrichtung ist beispielsweise aus der DE 10 2013 211 528 A1 vorbekannt.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert werden. Es zeigen:
- Figur 1: teilgeschnittene Seitenansicht einer Greifvorrichtung gemäß einem ersten Ausführungsbeispiel;
- Figur 2: vergrößerte Darstellung des geschnittenen Abschnitts der Figur 1;
- Figur 3: schematische perspektivische Darstellung des ersten und zweiten Ringmagneten gemäß Figur 1 und 2;
- Figur 4: teilgeschnittene Ansicht einer Greifvorrichtung gemäß einem zweiten Ausführungsbeispiel;
- Figur 5: vergrößerte Darstellung des geschnittenen Abschnitts der Figur 4;
- Figur 6: Vergrößerte Darstellung einer Weiterbildung der in den Figuren 4 und 5 gezeigten Greifvorrichtung gemäß einem dritten Ausführungsbeispiel;
- Figur 7: teilgeschnittene Seitenansicht einer Greifvorrichtung gemäß einem vierten Ausführungsbeispiel;
- Figur 8: vergrößerte Darstellung des geschnittenen Abschnitts der Figur 7.

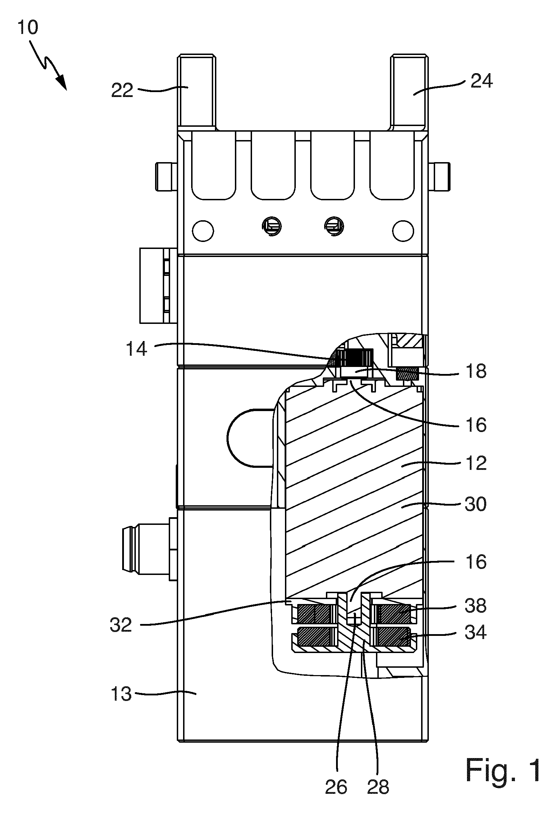

Die Figur 1 zeigt eine als Greifvorrichtung ausgebildete Automationskomponente 10, die einen in einem Greifergehäuse 13 angeordneten Antrieb 12 in Form eines Elektromotors umfasst. Der Antrieb weist eine Antriebswelle 16 auf, an deren einem freien Ende 14 ein Ritzel 18 vorgesehen ist.

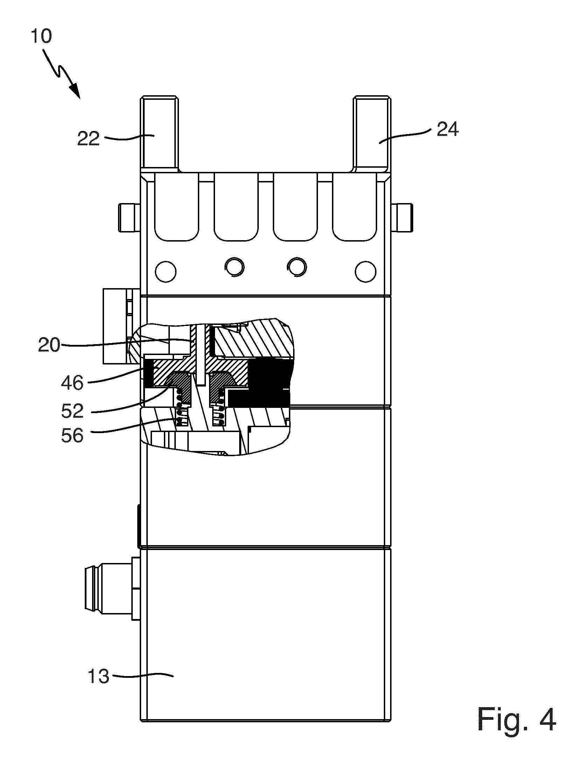

Dem Ritzel 18 ist ein Antriebsgetriebe in Form eines Stirnradgetriebes nachgeschaltet, welches in Figur 4 abschnittsweise zu erkennen ist. Das Antriebsgetriebe umfasst eine Getriebewelle 20. Die Getriebewelle 20 treibt die nicht gezeigte Abtriebswelle über ein Ritzel an. Die Abtriebswelle bildet mit einem ebenfalls nicht gezeigten Ritzel ein Stellglied über welches zwei einander gegenüberliegende Backen 22, 24 antreibbar sind. Die Backen 22, 24 sind mittels des Stellgliedes aufeinander zu beziehungsweise voneinander weg bewegbar und können damit einen Gegenstand greifen.

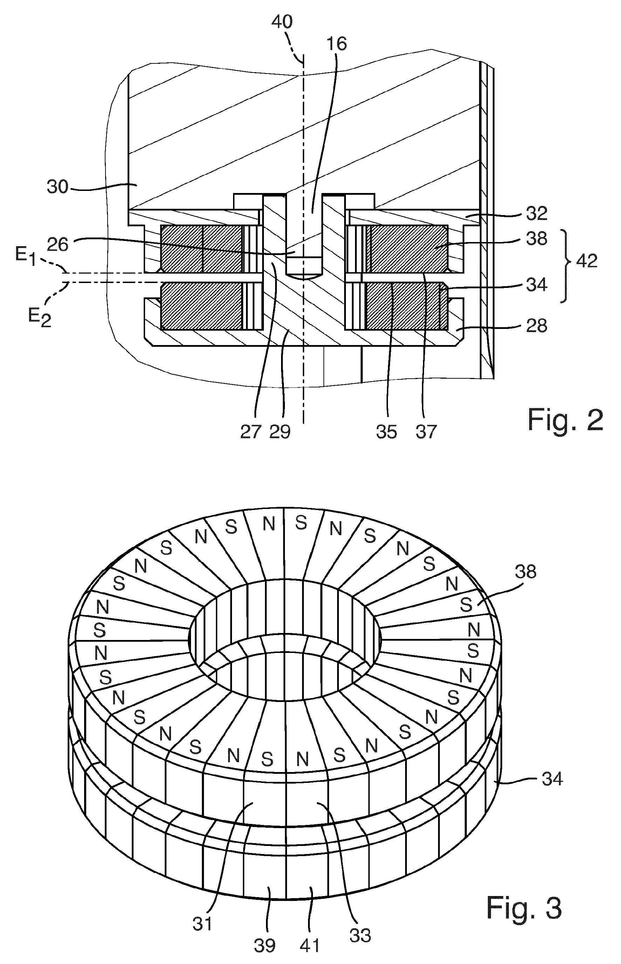

Wie den Figuren 1 und 2 zu entnehmen ist, ist am zweiten freien Ende 26 der Antriebswelle 16 eine ankerartig ausgebildete erste Aufnahmeeinrichtung 28 angeformt. Wie der Figur 2 besonders deutlich zu entnehmen ist, durchgreifen die Antriebswelle 16 beziehungsweise der Stegabschnitt 27 der ersten Aufnahmeeinrichtung 28 das Gehäuse 30 des Antriebes 12 sowie eine an diesem Gehäuse angeformte zweite Aufnahmeeinrichtung 32. An einem Scheibenabschnitt 29 der ersten Aufnahmeeinrichtung 28 ist ein Ringmagnet 34 angeordnet. Gegenüberliegend und beanstandet zu diesem ersten Ringmagnet 34 ist in der zweiten Aufnahmeeinrichtung 32 ein zweiter Ringmagnet 38 angeordnet. Beide Ringmagnete 34, 38 verlaufen auf je einer Kreisbahn quer zur Drehachse 40 der Antriebswelle 16. Die einander zugewandten Oberflächen 35, 37 der Ringmagnete 34, 38 liegen dabei in Querebenen E1 beziehungsweise E2 zur Drehachse 40, wobei die Ebenen E1 und E2 voneinander beabstandet sind, so dass eine mechanisch reibungsfreie Bremseinheit 42 bereitgestellt werden kann.

Die Ringmagnete 34, 38 sind mehrpolig ausgebildet und umfassen, wie in der Figur 3 deutlich zu erkennen ist, 32 Segmente. Die einzelnen Segmente 31, 33 sind entlang der Drehachse 40 zylindrisch ausgebildet und auf einem Kreisring angeordnet, wobei einander benachbarte Segmente 31, 33 unterschiedlich gepolt sind. Die Grenzflächen der einander angrenzenden Segmente 31, 33 verlaufen in radialer Richtung. Die Ringmagnete 34, 38 bilden damit zusammen eine stromlose Bremseinheit 42, wobei eine reibungsfreie magnetische Bremskraft durch die Zusammenwirkung der Ringmagnete 34, 38 auf die Antriebswelle 16 ausgeübt wird. Während der Drehung der Antriebswelle 16 um die Drehachse 40 wird der erste Aufnahmeabschnitt 28 und damit auch der erste Ringmagnet 34 mitgedreht, so dass der Antrieb 12 die magnetische Anziehungskraft der Ringmagnete 34, 38 überwinden muss. Wird der Antrieb 12 stromlos geschaltet, so nehmen die Ringmagnete 34, 38 eine Raststellung ein, bei der die einzelnen Segmente 31, 33 des ersten Ringmagnetes 34 den unterschiedlich dazu gepolten Segmenten 39, 41 des zweiten Ringmagnetes 38 gegenüberliegen. Auf Grund der feinen Rastung hohen Anzahl der Segmente wird dabei eine ausreichend hohe Bremskraft bereigestellt.

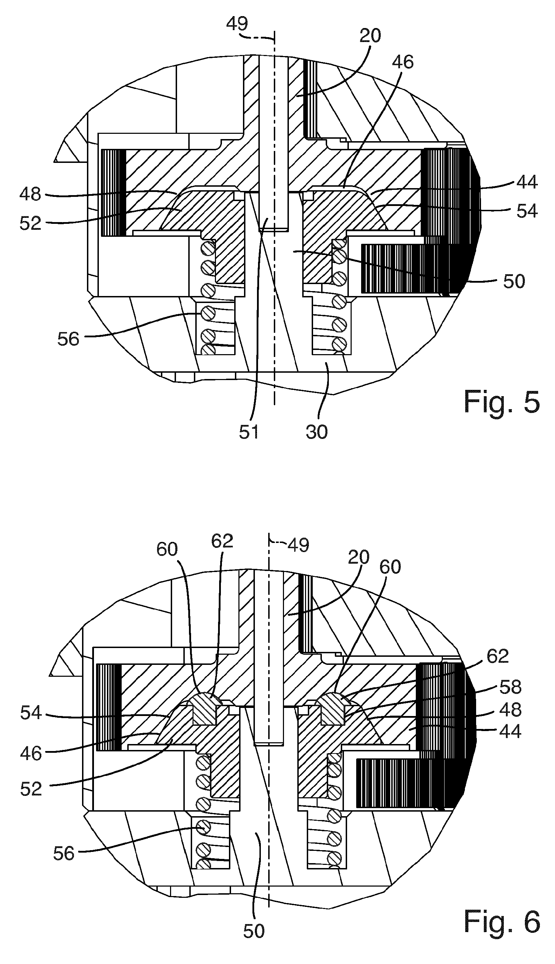

Die Figuren 4 und 5 zeigen eine alternative Ausführung der Bremseinheit 42. Zusätzlich oder alternativ zu der in den Figuren 1 bis 3 gezeigten magnetischen Bremseinheit 42 kann eine Bremseinheit 42, wie in den Figuren 4 und 5 gezeigt ist, im Bereich der Getriebewelle 20 vorgesehen sein. Die Getriebewelle 20 ist an einer Lagerwelle 51 drehbar gelagert angeordnet. Dabei weist die Getriebewelle 20 ein Ritzel 44 mit einer kegelstumpfförmigen Ausnehmung 46 auf. Die Ausnehmung 46 wird dabei von einer ersten Reibfläche 48 begrenzt. Die Ausnehmung 46 wird von der Lagerwelle 51 durchgriffen, wobei das freie Ende der Lagerwelle 51 in einem gehäuseseitigen Stützabschnitt 50 gelagert ist. Um den Stützabschnitt 50 ist ein Reibelement 52 verschieblich parallel zur Drehachse 49 der Getriebewelle 20 angeordnet. Das Reibelement 52 weist eine zur ersten Reibfläche 48 komplementäre zweite Reibfläche 54 auf. Am Reibelement 52 ist eine Schraubenfeder 56 um den Stützabschnitt 50 umlaufend angeordnet, wobei sich die Schraubenfeder 56 einerends am Reibelement 52 und andererends am Gehäuse 30 abstützt. Diese Schraubenfeder 56 übt damit eine Druckkraft auf das Reibelement 52 parallel zur Drehachse 49 aus, so dass die Reibflächen 48, 54 gegeneinander gedrückt werden. Damit übt die Bremseinheit 42 eine Reibkraft und folglich eine Bremskraft auf die Getriebewelle 20 aus.

Figur 6 zeigt eine alternative Ausgestaltung der Ausführungsform gemäß den Figuren 4 und 5. Dabei sind in einer Kreisbahn um die Drehachse 49 der Getriebewelle 20 Aussparungen 58 parallel zur Drehachse 49 im Reibelement 52 vorgesehen. In diese Aussparungen 58 sind pilzförmige elastisch nachgiebige Rastvorsprünge 60 eingesetzt. Demgegenüber sind eine Anzahl damit zusammenwirkender Rastvertiefungen 62 in der Oberfläche der Ausnehmung 46 vorgesehen. Bei einer Bewegung der Getriebewelle 20 werden die Rastvorsprünge 60 zwischen der ersten Reibfläche 48 und der zweiten Reibfläche 54 unter Vorspannung über die Rastvertiefungen 62 bewegt. Bei Stromlosschaltung des Antriebs 12 rasten die Rastvorsprünge 60 in die Rastvertiefungen 62 ein und nehmen damit eine diskrete Raststellung ein. Damit wird eine Bremseinheit 42 bereitgestellt, wobei durch das Verrasten der Rastvorsprünge 60 in den Rastvertiefungen 62 im Vergleich zu der in den Figuren 4 und 5 gezeigten Ausführungsform eine erhöhte Bremskraft bereitgestellt werden kann.

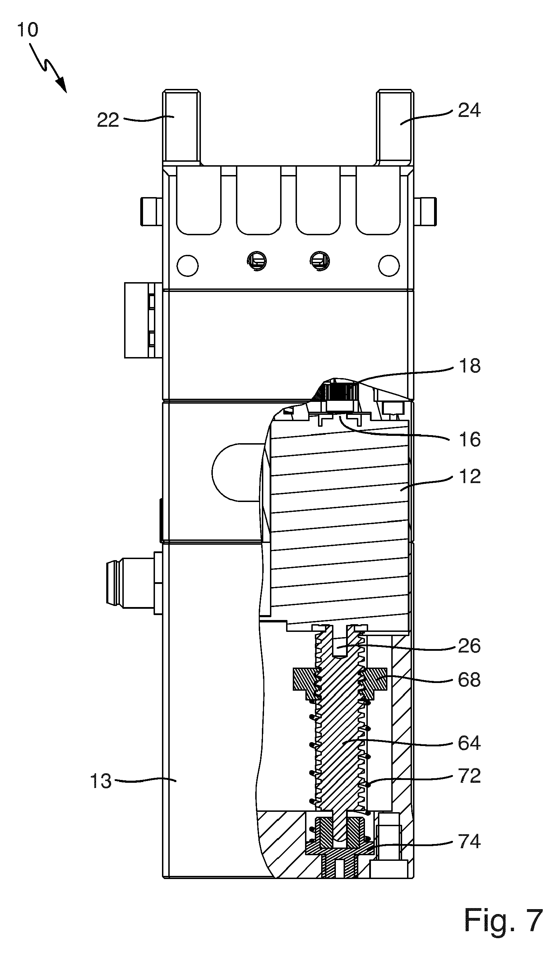

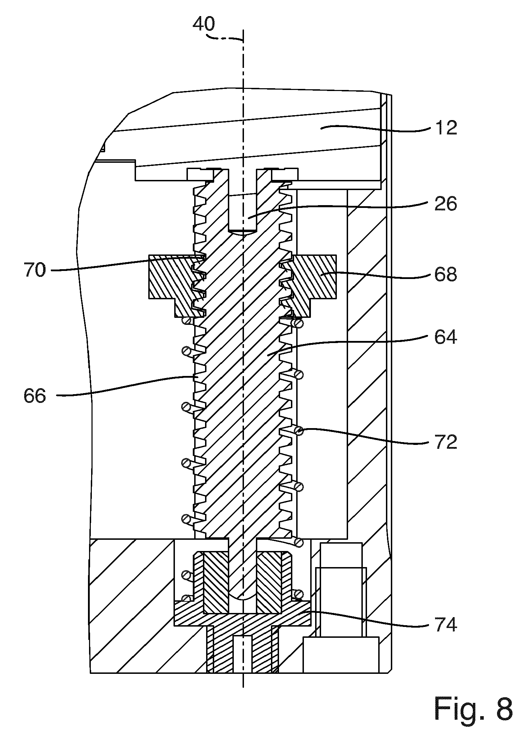

Die Figuren 7 und 8 zeigen eine weitere alternative Ausführung der Bremseinheit 42. Dabei umfasst die Antriebswelle 16 einen gewindespindelartig ausgebildeten Abschnitt 64, welcher an das ursprüngliche freie Ende 26 der Antriebswelle 16 angeformt ist. Der Abschnitt 64 weist ein Außengewinde 66 auf. Daran angeordnet ist eine Spindelmutter 68 mit einem zum Außengewinde 66 komplementären Innengewinde 70. Die Spindelmutter 68 ist drehfest geführt und parallel zur Drehachse 40 der Antriebswelle 16 axial entlang des Gewindes 66 bewegbar. Dabei ist eine Schraubenfeder 72 vorgesehen, welche sich einerends an der Spindelmutter 68 und andererends an einer gehäuseseitigen Einstellschraube 74 abstützt. Die Schraubenfeder 72 verläuft um den Abschnitt 64. Ferner übt die Schraubenfeder 72 eine Spannkraft auf die Spindelmutter 68 aus, so dass eine Reibkraft von der Spindelmutter auf den Abschnitt 64 und damit auf die Antriebswelle 16 ausgeübt wird.

Der Abschnitt 64, die Spindelmutter 68 sowie die Schraubenfeder 72 bilden damit eine Bremseinheit 42. Dabei ist die Federkraft über die Einstellschraube 74 einstellbar. Ferner nimmt die Bremskraft zu, je gespannter die Feder ist, also je weiter die Spindelmutter 68 von der Einstellschraube 74 entlang der Drehachse 40 entfernt ist. Folglich nimmt die Bremskraft zu, je näher sich die Backen 22, 24 sind.

Insgesamt ermöglichen alle Ausführungsformen das Festsetzen des Stellglieds einer Automationskomponenten mittels einer stromlosen Bremseinheit 42. Dabei wirkt eine von der Bremseinheit 42 ausgeübte Bremskraft fortwährend auf das Stellglied und/oder den Antrieb 12 und/oder ein mit dem Stellglied bewegungsgekoppeltes, zwischen dem Stellglied und dem Antrieb 12 vorgesehenes Bauteil 20. Die Bremskraft wirkt dabei dann, wenn das Stellglied bewegt wird als auch dann, wenn das Stellglied still steht und seine Stellposition eingenommen hat, beispielsweise, wenn die Backen 22, 24 einen Gegenstand gegriffen haben. Die andauernd ausgeübte Bremskraft ist dabei so hoch, dass bei Stromlosschaltung des Antriebs 12 auf Grund der Bremskraft das Stellglied festgesetzt ist.

## Patentansprüche

1. Automationskomponente (10) mit einem Antrieb (12), mit einem von dem Antrieb (12) zwischen Stellpositionen bewegbaren Stellglied und mit einer Bremseinheit (42), **dadurch gekennzeichnet, dass** die Bremseinheit (42) beim Bewegen des Stellgliedes und beim Einnehmen der Stellposition des Stellgliedes stromlos betrieben wird und eine Bremskraft auf das Stellglied und/oder den Antrieb (12) und/oder ein mit dem Stellglied bewegungsgekoppeltes Bauteil (20) ausübt, wobei das Stellglied bei Stromlosschaltung des Antriebs (12) auf Grund der Bremskraft festgesetzt ist.

2. Automationskomponente (10) nach Anspruch 1, **dadurch gekennzeichnet, dass** der Antrieb (12) eine Antriebswelle (16) aufweist, und dass die Bremskraft auf die Antriebswelle (16) wirkt.

3. Automationskomponente (10) nach Anspruch 1, **dadurch gekennzeichnet, dass** zwischen dem Antrieb (12) und dem Stellglied ein Antriebsgetriebe mit einer Getriebewelle (20) vorgesehen ist und dass die Bremskraft auf die Getriebewelle (20) wirkt.

4. Automationskomponente (10) nach einem der Ansprüche 2 oder 3, **dadurch gekennzeichnet, dass** die Bremseinheit (42) einen an der Antriebswelle (16) oder der Getriebewelle (20) angeordnete erste Magneteinheit (34) und eine zweite damit zusammenwirkende, stationäre Magneteinheit (38) umfasst, wobei die Magneteinheiten (34, 38) derart zusammenwirken, dass die Bremskraft auf die Antriebswelle (16) oder Getriebewelle (20) ausgeübt wird.

5. Automationskomponente (10) nach Anspruch 4, **dadurch gekennzeichnet, dass** die erste Magneteinheit als erster mehrpoliger Ringmagnet (34) ausgebildet ist und auf einer Kreisbahn quer zur Drehachse (40) der Antriebswelle (16) oder Getriebewelle (20) verläuft und dass die zweite Magneteinheit als zweiter mehrpoliger Ringmagnet (38) ausgebildet ist und entlang der Drehachse (40) der Antriebswelle (16) oder Getriebewelle (20) gegenüberliegend und beabstandet dazu angeordnet ist.

6. Automationskomponente (10) nach Anspruch 4 oder 5, **dadurch gekennzeichnet, dass** der erste Ringmagnet (34) an einem freien Ende (26) der Antriebswelle (16) oder Getriebewelle (20) angeordnet ist.

7. Automationskomponente (10) nach Anspruch 6, **dadurch gekennzeichnet, dass** der erste Ringmagnet (34) an einer am freien Ende (26) der Antriebswelle (16) oder Getriebewelle (20) angeformten ankerartig ausgebildeten ersten Aufnahmeeinrichtung (28) angeordnet ist, und dass der zweite Ringmagnet (38) an einer stationären zweiten Aufnahmeeinrichtung (32) angeordnet ist, wobei die Antriebswelle (16) oder Getriebewelle (20) den zweiten Ringmagnet (38) durchgreift.

8. Automationskomponente (10) nach einem der Ansprüche 1 bis 3, **dadurch gekennzeichnet, dass** die Bremseinheit (42) eine am Stellglied oder am Antrieb (12) oder am Bauteil (20) vorgesehene erste Reibfläche (48) sowie eine damit zusammenwirkende zweite Reibfläche (54) umfasst.

9. Automationskomponente (10) nach Anspruch 8, **dadurch gekennzeichnet, dass** die zweite Reibfläche (54) verschieblich gelagert ist, wobei die Bremseinheit (42) ferner ein Druckmittel (56) umfasst, sodass die zweite Reibfläche (54) mittels des Druckmittels (56) gegen die erste Reibfläche (48) beaufschlagbar ist.

10. Automationskomponente (10) nach Anspruch 8 oder 9, **dadurch gekennzeichnet, dass** die erste Reibfläche (48) bzw. die zweite Reibfläche (54) mehrere Rastvorsprünge (60) aufweist, und dass die zweite Reibfläche (54) bzw. die erste Reibfläche (48) dazu komplementäre Rastvertiefungen (62) aufweist, wobei die Rastvorsprünge (60) bei Stromlosschaltung des Antriebs (12) in die Rastvertiefungen (62) einrasten.

11. Automationskomponente (10) nach Anspruch 2 oder 3, **dadurch gekennzeichnet, dass** die Bremseinheit (42) einen gewindespindelartig ausgebildeten Abschnitt (64) der Antriebswelle (16) oder Getriebewelle (20) und eine daran angeordnete Spindelmutter (68) umfasst.

12. Automationskomponente (10) nach Anspruch 11, **dadurch gekennzeichnet, dass** die Spindelmutter (68) mit einem Spannmittel (72) verbunden ist.

13. Automationskomponente (10) nach Anspruch 12, **dadurch gekennzeichnet, dass** das Spannmittel (72) als Feder ausgebildet ist und dass die Feder eine Spannkraft auf die Spindelmutter (68) längs der Bewegungsrichtung der Spindelmutter (68) ausübt.

14. Automationskomponente (10) nach Anspruch 13, **dadurch gekennzeichnet, dass** die Federkraft mittels einer Einstelleinrichtung (74) einstellbar ist.

15. Spann- oder Greifvorrichtung als Automationskomponente (10) nach einem der vorhergehenden Ansprüche, **dadurch gekennzeichnet, dass** wenigstens eine Backe (22, 24) mit dem Stellglied bewegungsgekoppelt ist, wobei das Stellglied bei Stromlosschaltung des Antriebs (12) derart festgesetzt ist, dass ein mittels der Backe (22, 24) gegriffener oder gespannter Gegenstand gegriffen oder gespannt bleibt.

16. Spann- oder Greifvorrichtung nach dem vorhergehenden Anspruch, **dadurch gekennzeichnet, dass** zwischen dem Stellglied und der Backe (22, 24) ein elastisch verformbares Federelement vorgesehen ist, wobei die elastische Verformung des Federelements bei gegriffenem oder gespanntem Gegenstand größer ist als das Spiel des festgesetzten Stellglieds.
